# EUROPÄISCHE PATENTSCHRIFT

(11) **EP 1 927 182 B1**
(45) Veröffentlichungstag und Bekanntmachung des Hinweises auf die Patenterteilung: **03.10.2018**
(21) Anmeldenummer: 06792641.0
(22) Anmeldetag: 02.08.2006
(51) Int. Cl.: H02M 7/49, H02M 1/32, H02M 7/483

(54) **STEUERVERFAHREN ZUR REDUNDANZNUTZUNG IM STÖRUNGSFALL EINES MEHRPHASIGEN STROMRICHTERS MIT VERTEILTEN ENERGIESPEICHERN**
CONTROL PROCESS FOR REDUNDANCY USE IN THE EVENT OF A FAULT OF A POLYPHASE POWER CONVERTER HAVING DISTRIBUTED ENERGY STORAGES
PROCEDE DE COMMANDE D'UTILISATION DE REDONDANCE EN CAS DE PANNE D'UN REDRESSEUR MULTIPHASE COMPORTANT DES ACCUMULATEURS D'ENERGIE REPARTIS

(30) Priorität: 21.09.2005 DE 102005045091
(43) Veröffentlichungstag der Anmeldung: 04.06.2008
(73) Patentinhaber: Siemens Aktiengesellschaft, 80333 München (DE)
(72) Erfinder: SOMMER, Rainer, 91336 Heroldsbach (DE); HILLER, Marc, 90455 Nürnberg (DE)
(86) Internationale Anmeldenummer: PCT/EP2006/064943
(87) Internationale Veröffentlichungsnummer: WO 2007/033850

(56) Entgegenhaltungen:
- DE-A1- 10 103 031
- US-A- 5 986 909

## Beschreibung

Die Erfindung bezieht sich auf ein Verfahren zur Steuerung eines Stromrichters mit wenigstens zwei jeweils einen oberen und einen unteren jeweils wenigstens drei in Reihe geschalteten zweipoligen Subsysteme aufweisenden Ventilzweig aufweisenden Phasenmodulen bei Ausfall wenigstens eines Subsystems eines Ventilzweiges eines Phasenmoduls.

Eine derartige gattungsgemäße Stromrichterschaltung ist aus der DE 101 03 031 A1 bekannt und ein Ersatzschaltbild einer derartigen Stromrichterschaltung ist in der Figur 1 näher dargestellt. Gemäß diesem Ersatzschaltbild weist diese bekannte Stromrichterschaltung drei Phasenmodule auf, die jeweils mit 100 bezeichnet sind. Diese Phasenmodule 100 sind gleichspannungsseitig jeweils mit einer positiven und einer negativen Gleichspannungs-Sammelschiene P₀ und N₀ elektrisch leitend verbunden. Zwischen diesen beiden Gleichspannungs-Sammelschienen P₀ und N₀ steht eine nicht näher bezeichnete Gleichspannung an. Jedes Phasenmodul 100, das einen Brückenzweig des mehrphasigen Stromrichters bildet, weist einen oberen und einen unteren Brückenzweig auf, die, da diese Teilbrückenzweige jeweils ein Stromrichterventil des mehrphasigen Stromrichters mit verteilten Energiespeichern darstellen, im Folgenden als Ventilzweig T1 bzw. T3 bzw. T5 und T2 bzw. T4 bzw. T6 bezeichnet werden. Jeder dieser Ventilzweige T1 bis T6 weist eine Anzahl von elektrisch in Reihe geschalteten zweipoligen Subsystemen 10 auf. In diesem Ersatzschaltbild sind vier dieser Subsysteme 10 dargestellt. Jeder Verknüpfungspunkt zweier Ventilzweige T1 und T2 bzw. T3 und T4 bzw. T5 und T6 eines Phasenmoduls 100 bildet einen wechselspannungsseitigen Anschluss L1 bzw. L2 bzw. L3 dieses Phasenmoduls 100. Da in dieser Darstellung die Stromrichterschaltung drei Phasenmodule 100 aufweist, kann an deren wechselspannungsseitigen Anschlüssen L1, L2 und L3, auch als Lastanschlüsse bezeichnet, eine dreiphasige Last, beispielsweise ein Drehstrommotor, angeschlossen werden.

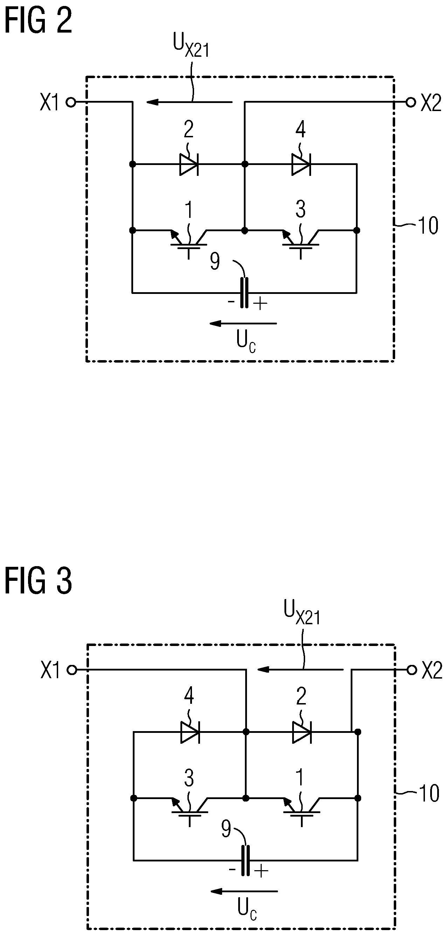

In der Figur 2 ist ein Ersatzschaltbild einer bekannten Ausführungsform eines zweipoligen Subsystems 10 näher dargestellt. Die Schaltungsanordnung nach Figur 3 stellt eine funktional völlig gleichwertige Variante dar, die ebenfalls aus der DE 101 03 031 A1 bekannt ist. Dieses bekannte zweipolige Subsystem 10 weist zwei abschaltbare Halbleiterschalter 1 und 3, zwei Dioden 2 und 4 und einen unipolaren Speicherkondensator 9 auf. Die beiden abschaltbaren Halbleiterschalter 1 und 3 sind elektrisch in Reihe geschaltet, wobei diese Reihenschaltung elektrisch parallel zum Speicherkondensator 9 geschaltet ist. Jedem abschaltbaren Halbleiterschalter 1 und 3 ist eine der beiden Dioden 2 und 4 derart elektrisch parallel geschaltet, dass diese zum korrespondierenden abschaltbaren Halbleiterschalter 1 oder 3 antiparallel geschaltet ist. Der unipolare Speicherkondensator 9 des Subsystems 10 besteht entweder aus einem Kondensator oder einer Kondensatorbatterie aus mehreren solchen Kondensatoren mit einer resultierenden Kapazität C₀. Der Verbindungspunkt von Emitter des abschaltbaren Halbleiterschalters 1 und Anode der Diode 2 bildet eine Anschlussklemme X1 des Subsystems 10. Der Verbindungspunkt der beiden abschaltbaren Halbleiterschalter 1 und 3 und der beiden Dioden 2 und 4 bilden eine zweite Anschlussklemme X2 des Subsystems 10.

In der Ausführungsform des Subsystems 10 gemäß Figur 3 bildet dieser Verbindungspunkt die erste Anschlussklemme X1. Der Verbindungspunkt von Kollektor des abschaltbaren Halbleiterschalters 1 und Kathode der Diode 2 bildet die zweite Anschlussklemme X2 des Subsystems 10.

In beiden Darstellungen der zwei Ausführungsformen des Subsystems 10 werden als abschaltbare Halbleiterschalter 1 und 3 wie in den Figuren 2 und 3 dargestellt **I**nsulated-**G**ate-**B**ipolar-**T**ransistoren (IGBT) verwendet. Ebenfalls können MOS-Feldeffekttransistoren, auch als MOSFET bezeichnet, verwendet werden. Außerdem können **G**ate-**T**urn-**O**ff-Thyristoren, auch als GTO-Thyristoren bezeichnet, oder **I**ntegrated-**G**ate-**C**ommutated-**T**hyristoren (IGCT) verwendet werden.

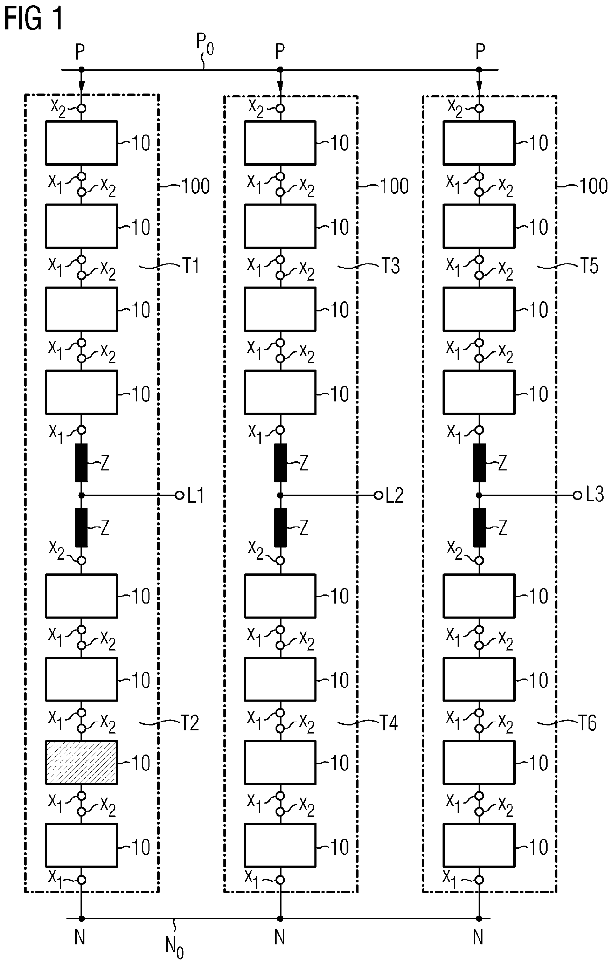

Gemäß der DE 101 03 031 A1 können die Subsysteme 10 eines jeden Phasenmoduls 100 der Stromrichterschaltung nach Figur 1 in einem Schaltzustand I, II und III gesteuert werden. Im Schaltzustand I ist der abschaltbare Halbleiterschalter 1 eingeschaltet und der abschaltbare Halbleiterschalter 3 ausgeschaltet. Dadurch ist eine an den Anschlussklemmen X1 und X2 anstehende Klemmenspannung U_{X21} des Subsystems 10 gleich Null. Im Schaltzustand II sind der abschaltbare Halbleiterschalter 1 ausgeschaltet und der abschaltbare Halbleiterschalter 3 eingeschaltet. In diesem Schaltzustand II ist die anstehende Klemmenspannung U_{X21} gleich der am Speicherkondensator 9 anstehenden Kondensatorspannung U_{C}. Im Schaltzustand III sind beide abschaltbaren Halbleiterschalter 1 und 3 ausgeschaltet und die am Speicherkondensator 9 anstehende Kondensatorspannung U_{C} ist konstant.

Damit dieser Stromrichter mit verteilten Energiespeichern 9 gemäß Figur 1 redundant arbeiten kann, muss sichergestellt werden, dass ein fehlerhaftes Subsystem 10 an seinen Klemmen X1 und X2 dauerhaft kurzgeschlossen ist. Das heißt, dass die Klemmenspannung U_{X21} des gestörten Subsystems 10 unabhängig von der Stromrichtung durch die Klemmen X1 und X2 Null ist.

Durch Ausfall eines der im Subsystem 10 vorhandenen abschaltbaren Halbleiterschalter 1 oder 3 oder einer zugehörigen Ansteuerschaltung ist dieses Subsystem 10 in seiner ordnungsgemäßen Funktion gestört. Weitere mögliche Ursachen für Funktionsstörungen sind u.a. Fehler in der zugeordneten Ansteuerschaltung der Halbleiterschalter, deren Stromversorgung, Kommunikation und Messwerterfassung. Das heißt, das Subsystem 10 kann nicht mehr wunschgemäß in einen der möglichen Schaltzustände I, II oder III gesteuert werden. Durch das Kurzschließen des Subsystems 10 an seinen Anschlüssen X1 und X2 wird diesem Subsystem 10 keine Energie mehr zugeführt. Dadurch werden Folgeschäden wie Überhitzung und Brand beim weiteren Betrieb des Umrichters sicher ausgeschlossen. Eine derartige kurzschlussartige leitende Verbindung zwischen den Anschlussklemmen X1 und X2 eines gestörten Subsystems 10 muss zumindest den Betriebsstrom eines Ventilzweiges T1,..., T6 des Phasenmoduls 100, in dem das gestörte Subsystems 10 verschaltet ist, sicher und ohne Überhitzung führen. In der älteren nationalen Patentanmeldung mit dem internen Aktenzeichen 2005P12103 DE ist angegeben, wie ein gestörtes Subsystem 10 sicher kurzgeschlossen werden kann, damit dieser bekannte Stromrichter mit verteilten Energiespeichern redundant weiterbetrieben werden kann.

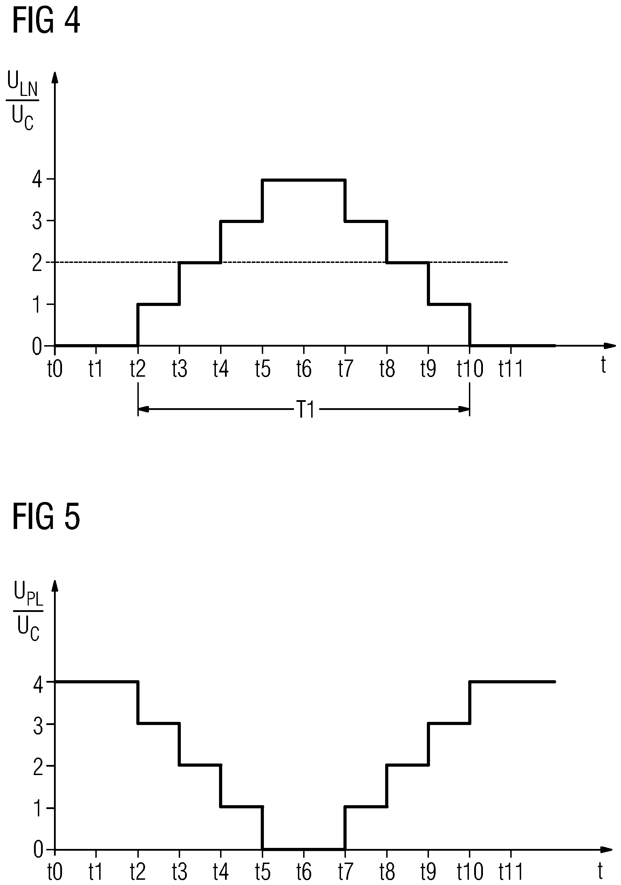

Für die folgende Erläuterung sei angenommen, dass die Speicherkondensatoren 9 aller Subsysteme 10 jeweils die gleiche Spannung U_{C} aufweisen. Verfahren zur anfänglichen Herstellung dieses Zustandes und dessen Beibehaltung im Betrieb sind ebenfalls aus der DE 101 03 031 A1 bekannt. In der FIG 4 ist in einem Diagramm über der Zeit t ein Verlauf der Potentialdifferenz U_{LN} der Klemme L eines Phasenmoduls 100 gegen ein gewähltes Bezugspotential N dargestellt. In der FIG 5 ist in einem Diagramm über der Zeit t ein Verlauf der Potentialdifferenz U_{PL} der Klemme P gegen einen Lastanschluss L dargestellt. Beide diese Potentialverläufe U_{LN} und U_{PL} sind auf die Spannung U_{C} der Speicherkondensatoren 9 der Subsysteme 10 normiert. Gemäß diesen normierten Potentialverläufen U_{LN}/U_{C}(t) und U_{PL}/U_{C}(t) werden zu den Zeitpunkten t2, t3, t4, t5 bzw. t7, t8, t9 und t10 von den vier Subsystemen 10 des Ventilzweiges T2 bzw. T1 jeweils ein Subsystem 10 zu- und abgeschaltet bzw. ab- und zugeschaltet. Ein Einschalten entspricht hierbei einem Übergang von Schaltzustand I auf Schaltzustand II. Ein Abschalten entspricht einem Übergang von Schaltzustand II auf Schaltzustand I. In diesen beiden Diagrammen ist jeweils eine Periode Tp des normierten Potentialverlaufes U_{LN}/U_{C}(t) und U_{PL}/U_{C}(t) dargestellt. Entsprechende Anteile von Oberschwingungen oder Gleichspannungskomponenten jeweils in den Ausgangsspannungen U_{LN} der Phasenmodule 100 des mehrphasigen Stromrichters mit verteilten Energiespeichern 9 löschen sich für den Fall eines symmetrischen Drehspannungssystems in den Differenzspannungen jeweils zweier phasenverschobener Ausgangsspannungen U_{L1N}, U_{L2N} oder U_{L3N} aus. Diesen beiden normierten Potentialverläufen U_{LN}/U_{C}(t) und U_{PL}/U_{C}(t) ist ebenfalls zu entnehmen, dass die Summe der normierten Potentiale zu jedem Zeitpunkt vier ist. D.h., die Gleichspannung zwischen den Gleichspannungs-Sammelschienen P₀ und N₀ entspricht immer einer konstanten Anzahl von Subsystemen 10 im Schaltzustand II mal der am Kondensator 9 anstehenden Kondensatorspannung U_{C}. In dem beispielhaft dargestellten Fall entspricht diese Anzahl der in den Ventilzweigen T1,..., T6 vorhandenen Anzahl an Subsystemen 10 des Stromrichters nach Fig. 1. Zum Zeitpunkt t0 und t1 sind die vier Subsysteme 10 beispielsweise des Ventilzweiges T1 alle im Schaltzustand II (U_{X21} = U_{C}) und die vier Subsysteme 10 des phasenmodulkorrespondierenden Ventilzweiges T2 alle im Schaltzustand I (U_{X21} = 0). Zum Zeitpunkt t2, t3, t4 und t5 wechselt jeweils ein Submodul 10 des Ventilzweiges T1 den Schaltzustand von II nach I, wogegen jeweils ein Subsystem 10 des Ventilzweiges T2 den Schaltzustand von I nach II wechselt. Fällt nun ein Subsystem 10 eines Ventilzweiges T1, T2 bzw. T3, T4 bzw. T5, T6 eines Phasenmoduls 100 des mehrphasigen Stromrichters nach FIG 1 wegen irgendeiner Störung aus, so weist wenigstens eine der drei Ausgangsspannungen U_{L1N}, U_{L2N} oder U_{L3N} dieses mehrphasigen Stromrichters mit verteilten Energiespeichern 9 Oberschwingungs- und/oder Gleichspannungskomponenten auf, die unter Umständen zur Abschaltung dieses Stromrichters nach FIG 1 führen können.

US 5 986 909 offenbart ein Verfahren zur Steuerung eines Stromrichters bei Ausfall wenigstens eines Subsystems eines Ventilzweiges. Zugrunde liegt dabei eine mehrphasige Energieversorgung mit einer Vielzahl von in Reihe angeordneten Zellen sowie einem Bypass. Ein hoher Ausgangspegel wird durch eine Vielzahl von Zellen in den einzelnen Armen erreicht. Gestörte Zellen in einem der Arme werden überbrückt (bypassed) um einen Strompfad im betroffenen Arm zu ermöglichen. Die ungestörten Zellen werden verwendet, um einen gleichen Betrag und eine ausgeglichene Phasenbeziehung in der Ausgangsspannung zu erreichen.

Der Erfindung liegt nun die Aufgabe zugrunde, ein Steuerverfahren anzugeben, mit dem sich die Symmetriebedingungen auch bei einem Störungsfall wenigstens eines Subsystems eines Phasenmoduls eines Stromrichters mit verteilten Energiespeichern einhalten lassen.

Diese Aufgabe wird erfindungsgemäß mit den Merkmalen des Anspruchs 1 gelöst. Eine bevorzugte Ausführungsform ist in Anspruch 2 definiert.

Dadurch, dass erfindungsgemäß in den ungestörten Phasenmodulen des mehrphasigen Stromrichters mit verteilten Energiespeichern jeweils ein Subsystem eines zum Ventilzweig mit dem gestörten Subsystem korrespondierenden Ventilzweiges derart angesteuert wird, dass deren Klemmspannungen während des Störungsfalls Null sind, sind alle Ausgangsspannungen des Stromrichters mit verteilten Energiespeichern wieder gleich, so dass deren Differenzspannung keine durch drei teilbaren Oberschwingungs- und/oder Gleichspannungskomponenten mehr aufweisen.

Bei einem vorteilhaften Verfahren wird ein Subsystem eines zum gestörten Ventilzweig korrespondierenden Ventilzweiges des gestörten Phasenmoduls derart angesteuert, dass dessen Klemmspannung gleich einer Kondensatorspannung des Subsystems ist. Dadurch ist die Ausgangsspannung dieses gestörten Phasenmoduls wieder symmetrisch zum Mittelwert einer Grundschwingung dieser treppenförmigen Ausgangsspannung. In den ungestörten Phasenmodulen wird entsprechend verfahren, so dass die drei Ausgangsspannungen eines dreiphasigen Stromrichters mit verteilten Energiespeichern wieder ein symmetrisches Drehspannungssystem bilden. Außerdem entspricht der Wert der Zwischenkreisspannung dem Wert der Zwischenkreisspannung im ungestörten Fall, wodurch die Spannungsbeanspruchung der abschaltbaren Halbleiterschalter der Systeme ebenfalls der Spannungsbeanspruchung im ungestörten Fall entspricht.

Bei einem weiteren vorteilhaften Verfahren werden die Schaltzeitpunkte der Steuersignale für die Subsysteme der Ventilzweige der Phasenmodule des mehrphasigen Stromrichters mit verteilten Energiespeichern zeitlich versetzt. Durch diese zeitliche Versetzung der Steuersignale für die Subsysteme eines jeden Phasenmoduls wird erreicht, dass der ungestörte Amplitudenverlauf einer Grundschwingung einer Phasen-Ausgangsspannung im Störungsfall näherungsweise beibehalten wird.

Mit diesem erfindungsgemäßen Steuerverfahren können die Ausgangsspannungen der Phasenmodule eines mehrphasigen Stromrichters mit verteilten Energiespeichern auch im Störungsfall aufrechterhalten werden. Dadurch kann dieser Stromrichter redundant betrieben werden. Für eine mit diesem mehrphasigen Stromrichter mit verteilten Energiespeichern verbundene mehrphasige Last ist es nicht erkennbar, ob und wie viele Subsysteme in einem Ventilzweig eines Phasenmoduls dieses mehrphasigen Stromrichters gestört sind. Das einzige, was auffällt, ist, dass dieses mehrphasige Ausgangsspannungssystem bei unverändertem Betriebspunkt eine verminderte Amplitude aufweist, ansonsten gibt es gegenüber den ungestörten Betriebspunkt keinen Unterschied.

Zur weiteren Erläuterung der Erfindung wird auf die Zeichnung Bezug genommen, in der mehrere Ausführungsformen eines erfindungsgemäßen Verfahrens zur Steuerung eines mehrphasigen Stromrichters mit verteilten Energiespeichern schematisch veranschaulicht sind.
- FIG 1: zeigt ein Ersatzschaltbild einer bekannten Stromrichterschaltung mit verteilten Energiespeichern, in der
- FIG 2: ist ein Ersatzschaltbild einer ersten Ausführungsform eines bekannten Subsystems dargestellt, die
- FIG 3: zeigt ein Ersatzschaltbild einer zweiten Ausführungsform eines bekannten Subsystems, in den
- Figuren 4 und 5: sind jeweils in einem Diagramm über der Zeit t genormte Potentialverläufe an den beiden Ventilzweigen eines Phasenmoduls des Stromrichters nach FIG 1 dargestellt, in den
- Figuren 6 und 7: sind die Potentialverläufe gemäß der Figuren 4 und 5 jeweils in einem Diagramm über der Zeit t bei Ausfall eines Subsystems in einem unteren Ventilzweig des Stromrichters nach FIG 1 dargestellt, in den
- Figuren 8 und 9: sind die Potentialverläufe gemäß der Figuren 4 und 5 jeweils in einem Diagramm über der Zeit t bei Ausfall eines Subsystems in einem oberen Ventilzweig des Stromrichters nach FIG 1 veranschaulicht, in den
- Figuren 10 und 11: sind die Potentialverläufe gemäß der Figuren 6 und 7 jeweils in einem Diagramm über der Zeit t dargestellt, wobei zusätzlich die Schaltzeitpunkte der Steuersignale zeitlich versetzt sind, und in den
- Figuren 12 und 13: sind die Potentialverläufe gemäß der Figuren 8 und 9 jeweils in einem Diagramm über der Zeit t dargestellt, wobei zusätzlich die Schaltzeitpunkte der Steuersignale zeitlich versetzt sind.

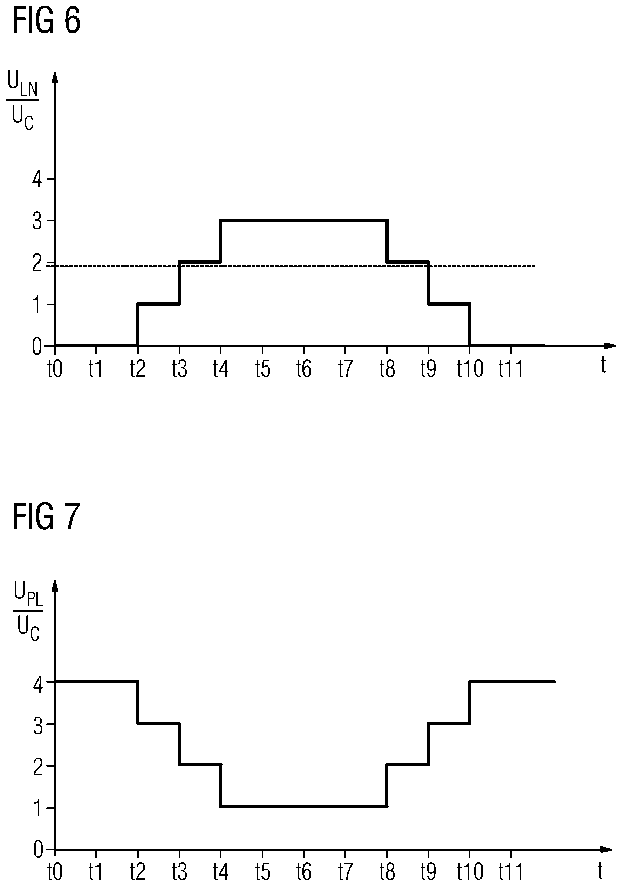

Es sei nun angenommen, dass ein Subsystem 10 des Ventilzweiges T2 des Phasenmoduls 100 des Stromrichters mit verteilten Energiespeichern 9 gemäß FIG 1 wegen irgendeiner Störung sicher kurzgeschlossen ist. Dieses gestörte Subsystem 10 ist in dem Ersatzschaltbild gemäß FIG 1 mittels einer Schraffur kenntlich gemacht. Dadurch können zur Generierung des zeitlichen Verlaufs des normierten Ausgangs-Potentials U_{L1N}/U_{C}(t) nur drei Subsysteme 10 verwendet werden, wogegen zur Generierung des zeitlichen Verlaufes des normierten Potentials U_{PL1} jedoch weiterhin vier Subsysteme 10 verwendet werden. Das bedeutet, dass der Potentialverlauf U_{L1N}/U_{C}(t) entsprechend der FIG 4 eine Potentialstufe weniger aufweist. Das heißt, dieser Potentialverlauf U_{L1N}/U_{C}(t) entspricht dem Potentialverlauf U_{L1N}/U_{C}(t) gemäß dem Diagramm der FIG 6. Am Potentialverlauf U_{PL1}/U_{C}(t) hat sich durch das gestörte System 10 des Ventilzweiges T2 nichts geändert, so dass dieser Potentialverlauf U_{PL1}/U_{C}(t) weiterhin dem Potentialverlauf U_{PL1}/U_{C}(t) gemäß dem Diagramm der FIG 5 verläuft. Dadurch ist in diesem gestörten Phasenmodul 100 für zwei Zeiteinheiten t6 - t5 und t7 - t6 die zwischen den Gleichspannungs-Sammelschienen P₀ und N₀ anstehende Gleichspannung gleich 3·U_{C} gegenüber 4·U_{C} in den ungestörten Phasenmodulen 100. Da die zwischen den Gleichspannungs-Sammelschienen P₀ und N₀ anstehende Gleichspannung eingeprägt wird, fließt im gestörten Phasenmodul 100 ein höherer Ventilstrom, der die Bauteile eines jeden Subsystems 10 dieses gestörten Phasenmoduls 100 zusätzlich belastet. Überschreitet dieser Ventilstrom zulässige Stromwerte eines Bauelementes eines Subsystems 10 dieses Phasenmoduls 100, schaltet der mehrphasige Stromrichter mit verteilten Energiespeichern 9 infolge Überstrom ab.

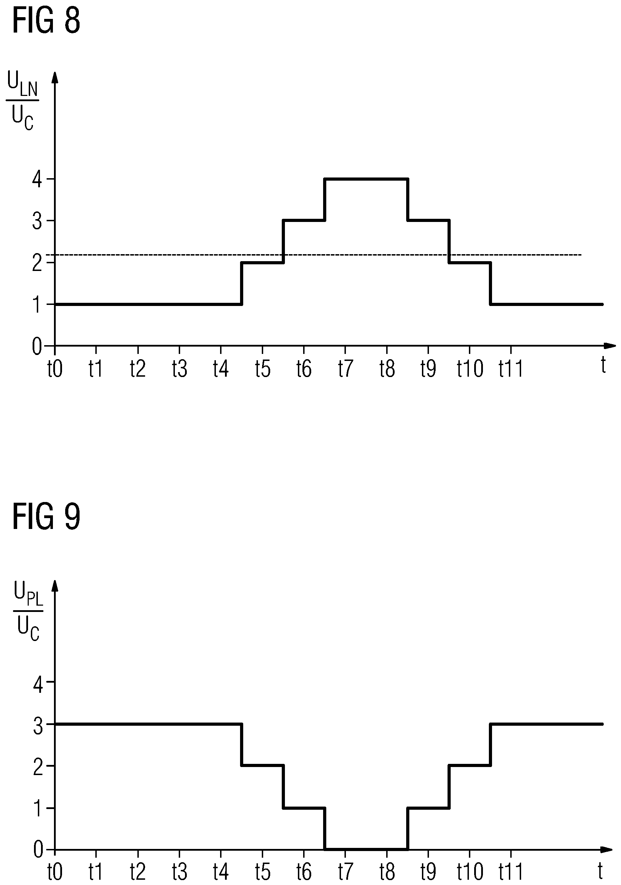

Um dies zu verhindern, wird der mehrphasige Stromrichter mit verteilten Energiespeichern 9 erfindungsgemäß gesteuert. Dazu muss zunächst festgestellt werden, welcher Ventilzweig T1, T2 bzw. T3, T4 bzw. T5, T6 eines Phasenmoduls 100 ein gestörtes Subsystem 10 aufweist. Ein derartiges Subsystem 10 kann in dem Ventilzweig T2 bzw. T4 bzw. T6 oder in dem Ventilzweig T1 bzw. T3 bzw. T5 auftreten. Für den Fall, dass ein gestörtes Subsystem 10 im Ventilzweig T2 bzw. T4 bzw. T6 auftritt, verlaufen die zugehörigen Potentialverläufe U_{L1N}/U_{C}(t) bzw. U_{L2N}/U_{C}(t) bzw. U_{L3N}/U_{C}(t) entsprechend dem Verlauf in dem Diagramm gemäß der FIG 6. Tritt ein gestörtes Subsystem 10 im Ventilzweig T1 bzw. T3 bzw. T5 auf, verlaufen die Potentialverläufe U_{PL1}/U_{C}(t) bzw. U_{PL2}/U_{C}(t) bzw. U_{PL3}/U_{C}(t) entsprechend dem Verlauf in dem Diagramm entsprechend der FIG 9.

Nachdem feststeht, in welchem der Ventilzweige T1,..., T6 ein Subsystem 10 gestört ist, werden beispielsweise in den zu diesem gestörten Ventilzweig T2 bzw. T1 korrespondierenden Ventilzweigen T4 und T6 bzw. T3 und T5 ebenfalls eine jeweils entsprechende Anzahl der im Ventilzweig T2 bzw. T1 auftretenden gestörten Subsysteme 10 derart angesteuert, dass deren Klemmenspannung U_{X21} = 0 sind. Dadurch teilt sich die zwischen den Gleichspannungs-Sammelschienen P₀ und N₀ anstehende eingeprägte Gleichspannung in allen Phasenmodulen 100 des mehrphasigen Stromrichters mit verteilten Energiespeichern 9 jeweils auf die gleiche Anzahl von Subsystemen 10 auf. Durch diese erfindungsgemäße Steuerung des mehrphasigen Stromrichters mit verteilten Energiespeichern 9 werden die Symmetriebedingungen auch im Störungsfall eingehalten, so dass die Differenzspannungen zwischen den Lastanschlüssen L1, L2 und L3 keine durch drei teilbaren Oberschwingungs- und Gleichspannungskomponenten aufweisen. Das heißt, für eine angeschlossene Last ist nicht erkennbar, ob der mehrphasige Stromrichter mit verteilten Energiespeichern 9 im gestörten oder ungestörten Betrieb arbeitet. Somit wird der mehrphasige Stromrichter mit verteilten Energiespeichern 9 redundant betrieben.

Soll die ungestörte Gleichspannung zwischen den Gleichspannungs-Sammelschienen P₀ und N₀ und die Spannungsbeanspruchung der abschaltbaren Halbleiterschalter 1 und 3 der Subsysteme 10 der Phasenmodule 100 eines mehrphasigen Stromrichters mit verteilten Energiespeichern 9 auch im Störungsfall aufrechterhalten werden, so wird im gestörten Phasenmodul 100 ein zum gestörten Ventilzweig T2 bzw. T4 bzw. T6 oder T1 bzw. T3 bzw. T5 korrespondierender Ventilzweig T1 bzw. T3 bzw. T5 oder T2 bzw. T4 bzw. T6 entsprechend der Anzahl der gestörten Subsysteme 10 eine entsprechende Anzahl von Subsystemen derart angesteuert, dass für deren Klemmenspannung gilt U_{X21} = U_{C}. In den ungestörten Phasenmodulen 100 des mehrphasigen Stromrichters mit verteilten Energiespeichern 9 wird entsprechend verfahren. Durch diesen zusätzlichen Verfahrensschritt des erfindungsgemäßen Verfahrens ist die Anzahl der verwendeten Subsysteme 10 im gestörten und ungestörten Fall der Phasenmodule 100 dieses mehrphasigen Stromrichters mit verteilten Energiespeichern 9 wieder gleich. Dadurch verlaufen die Potentialverläufe U_{L1N}/U_{C}(t) und U_{PL1}/U_{C}(t) bzw. U_{L2N}/U_{C}(t) und U_{PL2}/U_{C} (t) bzw. U_{L3N}/U_{C}(t) und U_{PL3}/U_{C}(t) entsprechend den Verläufen in den Diagrammen der Figuren 6 und 7. Fällt ein Subsystem 10 im Ventilzweig T1 bzw. T3 bzw. T5 aus und wird der mehrphasige Stromrichter mit verteilten Energiespeichern 9 mit dem vorteilhaften erfindungsgemäßen Steuerverfahren betrieben, so verlaufen die Potentialverläufe U_{L1N}/U_{C}(t) und U_{PL1}/U_{C}(t) bzw. U_{L2N}/U_{C}(t) und U_{PL2}/U_{C}(t) bzw. U_{L3N}/U_{C}(t) und U_{PL3}/U_{C}(t) entsprechend den Verläufen in den Diagrammen der Figuren 8 und 9. Somit entsprechen die Potentialverläufe in den Diagrammen der Figuren 6, 8 und 7, 9 den Verläufen in den Diagrammen der Figuren 4 und 5 mit dem Unterschied, dass beispielsweise ein Subsystem 10 weniger zur Generierung der Potentialverläufe im gestörten Betrieb verwendet wird. D.h., die Ausgangsspannungen U_{L1N}, U_{L2N} und U_{L3N} des mehrphasigen Stromrichters mit verteilten Energiespeichern 9 fällt im gestörten Betrieb amplitudenmäßig etwas geringer aus. Die Differenz zum ungestörten Betrieb entspricht der Kondensatorspannung U_{C} eines Subsystems 10. Je mehr Subsysteme 10 im normalen Betrieb zur Generierung der Ausgangsspannungen U_{L1N}, U_{L2N} und U_{L3N} des mehrphasigen Stromrichters mit verteilten Energiespeichern 9 verwendet werden, umso geringer fällt die amplitudenmäßige Verringerung im Störungsbetrieb aus.

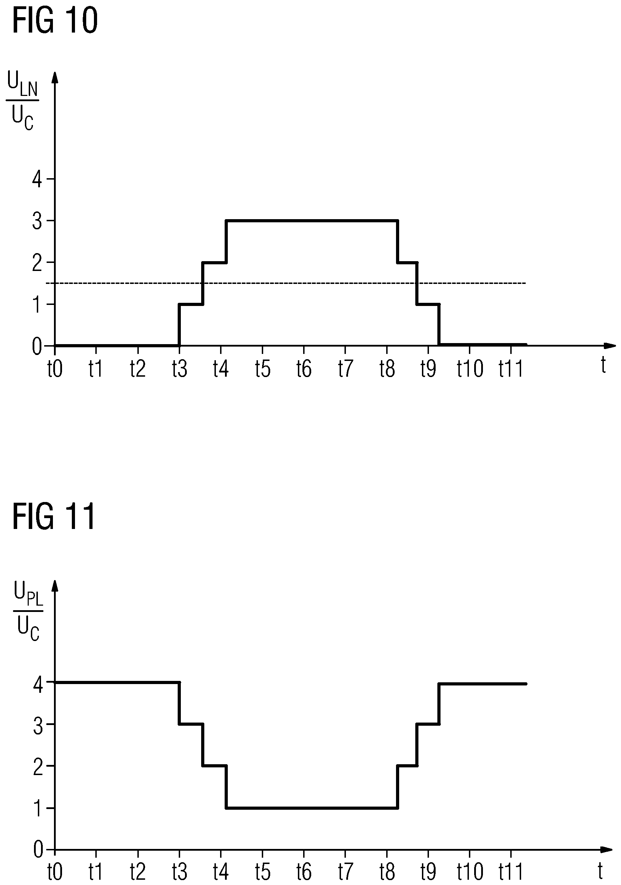

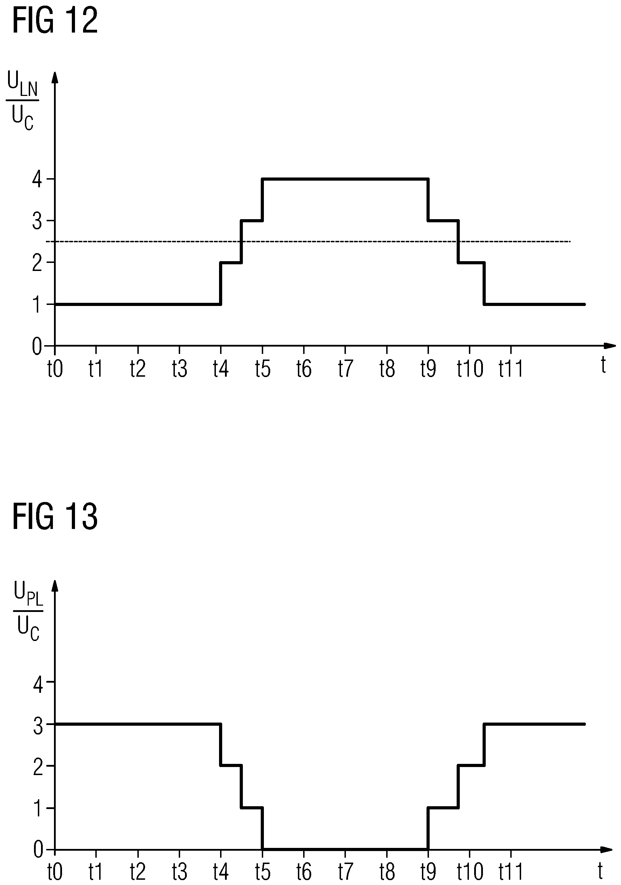

Soll jedoch die ungestörte Amplitude der Grundschwingung jeder erzeugten Ausgangsspannung U_{L1N}, U_{L2N} und U_{L3N} des mehrphasigen Stromrichters mit verteilten Energiespeichern 9 näherungsweise aufrechterhalten werden, so wird das vorteilhafte erfindungsgemäße Steuerungsverfahren derart modifiziert, dass zusätzlich die Schaltzeitpunkte der Steuersignale für die abschaltbaren Halbleiterschalter 1 und 3 der Subsysteme 10 der Ventilzweige T1,..., T6 zeitlich versetzt werden. In den Diagrammen der Figuren 10 und 11 bzw. 12 und 13 sind die damit erzeugten Potentialverläufe dargestellt.

Dieses erfindungsgemäße Steuerverfahren ist nicht darauf beschränkt, dass, wie beispielhaft erläutert, nur ein Subsystem 10 in einem Ventilzweig T1,..., T6 des mehrphasigen Stromrichters mit verteilten Energiespeichern 9 ausfällt. Mit diesem Steuerverfahren werden auch dann noch, wie beschrieben, Ausgangsspannungen U_{L1N}, U_{L2N} und U_{L3N} generiert, wenn mehrere Subsysteme 10 eines Ventilzweiges T1 bzw. T2 bzw. T3 bzw. T4 bzw. T5 bzw. T6 ausfallen. Zu beachten ist, dass die verbleibende Anzahl von Subsystemen 10 eines Ventilzweiges T1,..., T6 nicht kleiner als drei wird, damit die Oberschwingungen in den Ausgangsspannungen U_{L1N}, U_{L2N} und U_{L3N} amplitudenmäßig gering bleiben.

Besonders vorteilhaft wirkt sich dieses erfindungsgemäße Steuerverfahren bei mehrphasigen Stromrichtern mit verteilten Energiespeichern 9 für Energieversorgungsnetze aus. Zu derartigen Stromrichtern gehören Stromrichter für Netzkupplungen, für die Blindleistungskompensation und der Spannungsstabilisierung in Energieversorgungsnetzen. Wegen der hohen Spannung in üblichen Energieversorgungsnetzen weist ein mehrphasiger Stromrichter mit verteilten Energiespeichern 9 eine hohe Anzahl, beispielsweise zehn bis über einhundert, von Subsystemen 10 pro Ventilzweig T1,..., T6 auf.

## Patentansprüche

1. Verfahren zur Steuerung eines Stromrichters mit wenigstens zwei einen oberen und einen unteren jeweils wenigstens drei in Reihe geschalteten zweipoligen Subsysteme (10) aufweisenden Ventilzweig (T1,..., T6) aufweisenden Phasenmodulen (100) bei Ausfall wenigstens eines Subsystems (10) eines Ventilzweiges (T1,..., T6), wobei der Ventilzweig (T1,..., T6) mit dem ausgefallenen Subsystem (10) ermittelt wird, wobei jeweils ein Subsystem (10) eines zum gestörten Ventilzweig (T1,..., T6) korrespondierenden Ventilzweiges (T1,..., T6) eines jeden ungestörten Phasenmoduls (100) derart angesteuert wird, dass dessen Klemmenspannung (U_{X21}) jeweils Null ist, wobei ein Subsystem (10) eines zum gestörten Ventilzweig (T1,..., T6) korrespondierenden Ventilzweiges (T1,..., T6) des gestörten Phasenmoduls (100) derart angesteuert wird, dass dessen Klemmenspannung (U_{X21}) gleich einer Kondensatorspannung (U_{C}) des Subsystems (10) ist, und dass jeweils ein Subsystem (10) eines zu diesem Ventilzweig (T1,..., T6) korrespondierenden Ventilzweiges (T1,..., T6) eines jeden ungestörten Phasenmoduls (100) derart angesteuert wird, dass dessen Klemmenspannung (U_{X21}) jeweils gleich einer Kondensatorspannung (U_{C}) dieses Subsystems (10) ist.

2. Steuerverfahren nach Anspruch 1, wobei die Schaltzeitpunkte (t₁,..., t₁₁) der Steuersignale der Subsysteme (10) der Ventilzweige (T1,..., T6) der Phasenmodule (100) der Stromrichterschaltung zeitlich versetzt werden.

## Claims

1. Method for controlling a converter having at least two phase modules (100), which have an upper and a lower valve branch (T1, T6) which each have at least three series-connected two-pole subsystems (10), in the event of failure of at least one subsystem (10) in one valve branch (T1,..., T6), with the valve branch (T1,..., T6) with the failed subsystem (10) being determined, with one subsystem (10) of a valve branch (T1,..., T6) which corresponds to the faulty valve branch (T1,..., T6) in each sound phase module (100) in each case being driven such that ist terminal voltage (Uₓ₂₁) is in each case zero, with a subsystem (10) of a valve branch (T1,..., T6) which corresponds to the faulty valve branch (T1,..., T6) in the faulty phase module (100) being driven such that its terminal voltage (Uₓ₂₁) is equal to a capacitor voltage (U_{C} of the subsystem (10), and in that in each case one subsystem (10) of a valve branch (T1,..., T6) which corresponds to this valve branch (T1,..., T6) in each sound phase module (100) is driven such that its terminal voltage (Uₓ₂₁) is in each case equal to a capacitor voltage (U_{C}) of this subsystem (10).

2. Control method according to Claim 1 wherein the switching times (t1,..., t₁₁) of the control signals of the subsystems (10) of the valve branches (Ti,..., T6) of the phase modules (100) of the converter circuit are offset in time.

## Revendications

1. Procédé de commande d'un convertisseur, comprenant au moins deux modules (100) de phase ayant une branche (T1, ...,T6) de soupape supérieure et inférieure, ayant chacune au moins trois sous-systèmes (10) bipolaires montés en série, en cas de panne d'au moins un sous-système (10) d'une branche (T1, ...,T6) de soupape, dans lequel on détermine la branche (T1, ...,T6) de soupape ayant le sous-système (10) en panne, dans lequel on excite respectivement un sous-système (10) d'une branche (T1, ...,T6) de soupape, correspondant à la branche (T1, ...,T6) de soupape perturbée, d'un module (100) de phase non perturbé, de manière à ce que sa tension (U_{X21}) aux bornes soit nulle, dans lequel on excite un sous-système (10) d'une branche (T1, ...,T6) de soupape, correspondant à une branche (T1, ...,T6) de soupape perturbée, du module (100) de phase perturbé, de manière à ce que sa tension (U_{X21}) aux bornes soit égale à une tension (U_{C}) de condensateur du sous-système (10) et en ce que l'on excite respectivement un sous-système d'une branche (T1, ...,T6) de soupape, correspondant à cette branche (T1, ...,T6) de soupape, de chaque module (10) de phase non perturbé, de manière à ce que sa tension (U_{X21}) aux bornes soit égale à une tension (U_{C}) de condensateur de ce sous-système (10).

2. Procédé de commande suivant la revendication 1, dans lequel on décale dans le temps les instants (t₁, ..., t₁₁) de commutation des signaux de commande des sous-systèmes (10) des branches (T1, ...,T6) de soupape des modules (100) de phase du montage de convertisseur.
